# EUROPÄISCHE PATENTSCHRIFT

(11) **EP 0 881 451 B1**
(45) Veröffentlichungstag und Bekanntmachung des Hinweises auf die Patenterteilung: **04.08.2004**
(21) Anmeldenummer: 98108858.6
(22) Anmeldetag: 15.05.1998
(51) Int. Cl.: F28F 13/00, F28D 7/00, F28D 9/00

(54) **Verfahren und Vorrichtung zur Verbesserung des Wärmeüberganges**
Process and device for improving heat transfer
Procédé et dispositif pour améliorer le transfert de chaleur

(30) Priorität: 28.05.1997 DE 19722360
(43) Veröffentlichungstag der Anmeldung: 02.12.1998
(73) Patentinhaber: Bayer MaterialScience AG, 51368 Leverkusen (DE)
(72) Erfinder: Clasen, Peter, Prof. Dr., 47802 Krefeld (DE); Brockhaus, Hans-Joachim, 40668 Meerbusch (DE); Casper, Clemens, Dr., 47809 Krefeld (DE); Jonen, Karl-Heinz, 47228 Duisburg (DE)

(56) Entgegenhaltungen:
- EP-A- 0 275 029
- GB-A- 938 073
- GB-A- 2 124 742
- US-A- 4 050 507
- US-A- 5 030 327

## Beschreibung

Die Erfindung betrifft ein Verfahren und eine Vorrichtung zur Verbesserung des Wärmeübergangs in einem Wärmetauscher, bei dem die Wärmetauscherelemente von einem Heizmedium durchströmt werden und ihre Warme an eine mit ihnen in Kontakt stehende, im Mantelraum des Wärmetauschers befindliche Flüssigkeit abgeben. Die Erfindung betrifft ein Verfahren zur Verbesserung des Wärmeübergangs an der Oberfläche von Heizflächen (Behältersieden) bei kleinen Wärmestromdichten bzw. kleinen Wandüberhitzungen, bei denen an der Oberfläche der Heizelemente keine Blasenverdampfung stattfindet. In einem solchen Fall wird die Wärme an der Heizelementoberfläche nur durch freie Konvektion übertragen, wobei der Wärmeübergang erfahrungsgemäß schlecht ist.

Die Verdampfung von Flüssigkeit an einer Heizfläche erfolgt in Verdampferkesseln an ebenen horizontalen oder vertikalen Heizwänden sowie an der Oberfläche von Rohrbündeln. Die Beheizung der Heizelemente kann entweder mit einem Fluid oder mittels elektrischer oder nuklearer Energie erfolgen (s. z.B. VDI-Wärmeatlas, 4. Auflage, Abschnitt Ha). Die Auslegung solcher Apparate erfolgt mit Hilfe bekannter Berechnungsverfahren oder durch Versuche. Bei genügend hoher Wandüberhitzung findet an der Oberfläche der Heizwände Blasenverdampfung statt. In einem solchen Fall ist der Wärmeübergangkoeffizient erfahrungsgemäß relativ hoch und die erforderliche Heizfläche bei vorgegebener Leistung des Apparates relativ klein. Bei Temperaturdifferenzen zwischen der Oberfläche der Wärmetauscherelemente und der Siedetemperatur der umgebenden Flüssigkeit, die kleiner 20°C, vorzugsweise kleiner 2 bis 10°C sind, findet normalerweise keine Blasenverdampfung an den Heizwänden statt. Die Wärme wird in einem solchen Fall nur durch Wärmeleitung und Konvektion übertragen. Der Wärmeübergangskoeffizient an der Wärmetauscherfläche ist in einem solchen Fall relativ niedrig, so daß die erforderliche Heizfläche und das Apparatevolumen relativ groß dimensioniert werden müssen.

In der Kältetechnik werden bei kleinen Differenzen zwischen der Heizwandtemperatur und Siedetemperatur des Fluids liegende Rohrbündel eingesetzt, die mit dem zu verdampfenden Kältemittel berieselt werden (s. z.B. R. Billet: "Verdampfung und ihre technischen Anwendungen", Verlag Chemie (1983)). Um trockene Stellen auf den Rohren zu vermeiden, muß die Rieselmenge größer sein als die verdampfende Flüssigkeitsmenge. Im allgemeinen wird das Kältemittel mit Hilfe einer Pumpe mehrfach umgepumpt. Erfahrungsgemäß sind Pumpen einem Verschleiß unterworfen. Außerdem müssen sie beim Fördern siedender Flüssigkeiten eine entsprechende Zulaufhöhe haben.

Aus US 4 050 507 ist ein Verfahren zum verbesserten Wärmeübergang an den Wänden einer elektronischen Einheit, z.B. eines Halbleiter-Chips, bekannt, bei dem zusätzliche Heizelemente an oder nahe dem unteren Ende der Wärmeübertragungswände angebracht sind. An den zusätzlichen Heizelementen tritt Blasensieden auf. Aufsteigende Blasen verbessern so den Wärmeübergang an den Wänden der elektronischen Einheit.

Der Erfindung liegt die Aufgabe zugrunde, im Falle geringer Temperaturdifferenzen zwischen der Oberfläche der Wärmetauscherelemente und der Siedetemperatur der angrenzenden Flüssigkeit (geringe Wandüberhitzung) und dementsprechend niedrigen Wärmestromdichten an der Wärmetauscheroberfläche, den Wärmeübergang erheblich zu verbessern. Unter geringen Temperaturdifferenzen" werden hier (d.h. im Rahmen der Erfindung) so niedrige Wandüberhitzungen verstanden, daß an der Oberfläche der Wärmetauscherelemente noch keine Blasenverdampfung stattfindet.

Diese Aufgabe wird erfindungsgemäß durch die Merkmale gemäß Anspruch 1 beziehungsweise Anspruch 4 gelöst.

Die gebildeten Blasen strömen zwischen den übrigen Heizelementen, an denen keine Blasenverdampfung stattfindet, nach oben. Durch die aufsteigenden Blasen wird die Konvektion vergrößert und damit der Wärmeübergang an allen Wärmetauscherelementen verbessert. Die Dampfblasen entweichen an der Flüssigkeitsoberfläche. Die blasenfreie Flüssigkeit, die eine höhere Dichte hat als die Blasen enthaltende Flüssigkeit zwischen den Heizelementen, strömt außerhalb der Heizelemente abwärts. Auf diese Weise wird im Behälter eine Umlaufströmung erzeugt.

Dabei beträgt die Temperaturdifferenz ΔT_{H} zwischen der Oberfläche der zusätzlichen Heizelemente und der Siedetemperatur der umgebenden Flüssigkeit mehr als 10°C , und besonders bevorzugt mehr als 20°C.

Die Beheizung der Zusatzheizelemente kann vorteilhaft elektrisch oder mit Flüssigkeiten, Gasen oder kondensierenden Dämpfen als Heizmittel erfolgen. Dabei wird als Heizmittel gasförmiges, in den Zusatzheizelementen auskondensierendes Chlor verwendet.

Das erfindungsgemäße Verfahren wird in einem Wärmetauscher zur Kondensation Inertgas-haltiger Chlordämpfe durchgeführt, bei dem die im Mantelraum befindliche Flüssigkeit ebenfalls aus flüssigem Chlor besteht und der Wärmetauscher in Verbindung mit dem Mantelraum als Chlorrekuperator betrieben wird. Dabei wird dem Mantelraum verflüssigtes Chlor kontinuierlich zugeführt, das aufgrund der durch den Wärmetauscher zugeführten thermischen Energie verdampft und als Chlorgas wieder kontinuierlich abgeführt wird, während den Wärmetauscherelementen als Heizmedium gasförmiges Chlor zugeführt wird, das beim Durchströmen der für das gasförmige Chlor als Verdampfungskühler wirkenden Wärmetauscherelemente zumindest teilweise auskondensiert und als verflüssigtes Chlor kontinuierlich abgezogen wird.

Die Vorrichtung zur Durchführung der oben beschriebenen Verfahren geht aus von einem Verdampferkühler mit vertikal übereinander angeordneten, sich in horizontaler Richtung erstreckenden Wärmetauscherelementen und einem die Wärmetauscherelemente einschließenden, einen Mantelraum bildenden Behälter und ist erfindungsgemäß dadurch gekennzeichnet, daß unterhalb der Wärmetauscherelemente oder zwischen ihnen, vorzugsweise im unteren Drittel der vertikalen Anordnung, zusätzliche Heizelemente angeordnet sind, die mit einem von den Wärmetauscherelementen getrennten Heizmittelkreislauf verbunden sind.

Vorzugsweise bestehen dabei die Wärmetauscherelemente aus parallel zur Behälterachse angeordneten Rohren.

Alternativ können die Wärmetauscherelemente auch aus parallel zur Behälterachse angeordneten Hohlplatten mit vertikal orientierten Wärmetauscherflächen bestehen.

Als zusätzliche Heizelemente werden zweckmäßig parallel zur Behalterachse angeordnete, elektrisch beheizbare Heizstäben oder von einem Heizmittel durchströmte Rohre eingesetzt.

Besonders gut bewährt hat sich eine Ausführungsform, bei der zur Unterstützung einer zu einem Schlaufenraktor analogen Umlaufströmung im Behälter zu beiden Seiten der Wärmetauscherelemente Leitbleche angeordnet sind, die einen die Wärmetauscherelemente enthaltenden Stromungsraum mit aufsteigender Strömung und einen außerhalb der Wärmetauscherelemente ausgebildeten Stromungsraum mit absteigender Strömung begrenzen.

In Verdampfern, bei denen an den Oberflächen der Heizelemente infolge einer geringen Temperaturdifferenz zwischen den Oberflächen und der Siedetemperatur des angrenzenden Fluids keine Blasenverdampfung stattfindet, kann durch die beschriebenen Zusatzheizelemente der Wärmeübergang im gesamten Apparat erheblich verbessert werden.

Es zeigte sich, daß schon einige Zusatzheizelemente ausreichen, um bei sonst gleichen Bedingungen den mittleren Wärmeubergangskoeffizienten eines Rohrbündels um ein mehrfaches von dem bei freier Konvektion ohne Blasenbildung zu verbessern. Die erforderliche Heizfläche und das Apparatevolumen können durch diese Maßnahme erheblich verkleinert werden. Die beschriebenen Zusatzbeheizungen sind sowohl für Verdampfer mit liegenden Rohrbündeln als auch für senkrecht angeordnete Plattenelemente geeignet.

Im folgenden wird die Erfindung an Hand von Ausführungsbeispielen und Zeichnungen näher beschrieben. Es zeigen:
- Fig.1: einen Wärmetauscher mit zusatzlicher Beheizung, bei dem die Wärmetauscherelemente aus horizontal angeordneten Rohren bestehen
- Fig. 2: einen Wärmetauscher mit zusätzlicher Beheizung, bei dem die Wärmetauscherelemente aus vertikal stehenden Hohlplatten bestehen und
- Fig. 3: ein Fließschema für den Betrieb eines Chlor-Rekuperators

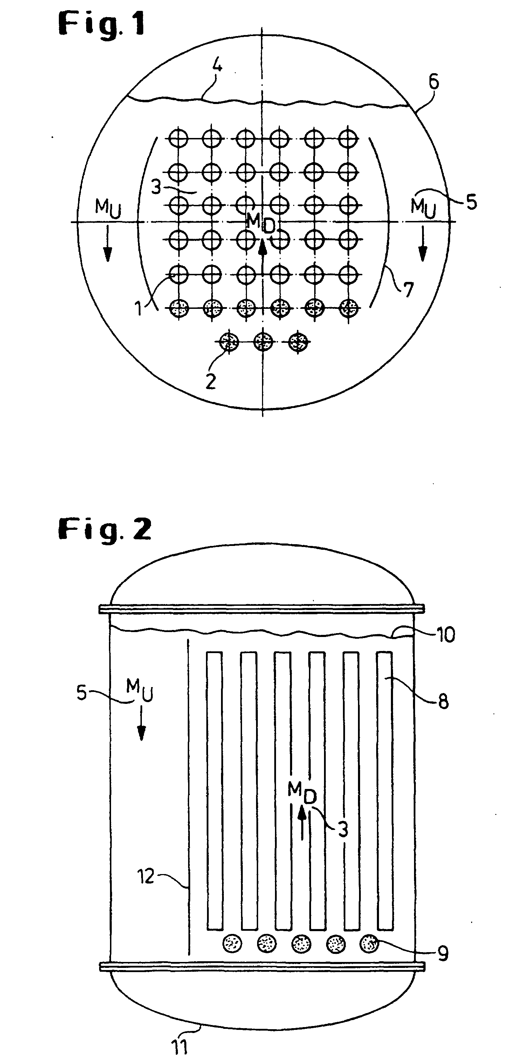

Bei dem in Fig. 1 im Querschnitt gezeigten Verdampfer soll in den Rohren 1 inertgashaltiges Chlor bei einem Druck von ca. 5,3 bar_{abs} verflüssigt werden. Die maximale Kondensationstemperatur beträgt +11°C und sinkt mit zunehmender Verflüssigungsmenge, da der Inertgasanteil ansteigt. Im Mantelraum 3 des Verdampfers (d.i. der Raum zwischen den Rohren 1) verdampft das verflüssigte Chlor. Der Druck über dem flüssigen Chlor beträgt ca. 3,4 bar_{abs}. Die mittlere Siedetemperatur im Mantelraum des Rohrbündels beträgt ca. -1 bis -2°C. Das in den Rohren 1 nicht kondensierte Chlor wird in nachgeschalteten Wärmeaustauschern (nicht gezeigt) weiter verflüssigt. Bei diesen geringen Temperaturdifferenzen zwischen dem kondensierenden und dem verdampfenden Chlor findet keine Blasenverdampfung an den Rohroberflächen statt. Unterhalb des Rohrbündels bzw. im unteren Bereich des Rohrbündels werden nun einige Rohre 2 fremdbeheizt, z. B. mit verdichteten Kältemitteln aus den nachgeschalteten Kondensatoren oder mit warmem Wasser als Heizmittel. Dabei wird die Temperatur des Heizmittels so hoch gewählt, daß die Temperaturdifferenz ΔT_{H} zwischen der Oberfläche dieser zusätzlichen Heizelemente und der Siedetemperatur der umgebenden Flüssigkeit so groß wird, daß an der Oberfläche der zusätzlichen Heizelemente Blasenverdampfung (Blasensieden) eintritt. Dies ist normalerweise bei Wandüberhitzungen von mehr als 5 bis 10°C, bevorzugt von mehr als 20°C der Fall. Die Dampfblasen (Dampf M_{d}) steigen zwischen den Rohren 1 des Wärmetauscher-Rohrbündels nach oben und entweichen an der Flussigkeitsoberfläche 4 Die blasenfreie bzw. blasenarme Flüssigkeit 5 (Strömung Mᵤ ) strömt zwischen dem Apparatemantel 6 und dem Rohrbündel abwärts. Zur Unterstützung (Verbesserung) dieser Umlaufströmung sind zwischen dem Rohrbündel aus den Rohren 1 und dem Apparatemantel 6 Leitbleche 7 angeordnet.

Bei dem in Fig. 2 gezeigten Verdampfer mit plattenförmigen Wärmeaustauscherelementen 8 (Hohlplatten) sind unter diesen Elementen analog zur Ausführung nach Fig. 1 aus Rohren 9 bestehende Zusatzheizelemente angebracht, die elektrisch oder mit einem Heizmittel so hoher Temperatur beheizt werden, daß an deren Oberfläche wiederum Blasenverdampfung stattfindet. Der erzeugte Dampf 3 (Strömung M_{d}) steigt wie bei dem oben beschriebenen Beispiel zwischen den Elementen 8 nach oben und entweicht an der Flüssigkeitsoberfläche 10. Die blasenfreie bzw. blasenarme Flüssigkeit 5 (Strömung Mᵤ) strömt in dem Zwischenraum zwischen der Behälterwand 11 und den äußersten Heizelementen nach unten. Zur Verbesserung der daraus resultierenden Umlaufströmumg sind im Mantelraum ein oder mehrere Leitbleche 12 angeordnet.

Die zusätzlichen Heizelemente 2 (in Fig. 1) bzw. 9 (in Fig. 2) können auch im unteren Teil der Wärmetauscherelemente 1 (d.h. innerhalb des Rohrbündels) bzw. 8 (d.h. zwischen den Hohlplatten) angeordnet werden. Als "unterer Teil" ist hier ca. 1/3 der Gesamthöhe des Rohrbündels bzw. der vertikal angeordneten Hohlplatten zu verstehen. Das Heizmittel wird in beiden Fällen durch einen von den regulären Wärmetauscherelementen 1 bzw. 8 getrennten Heizkreislauf zugeführt.

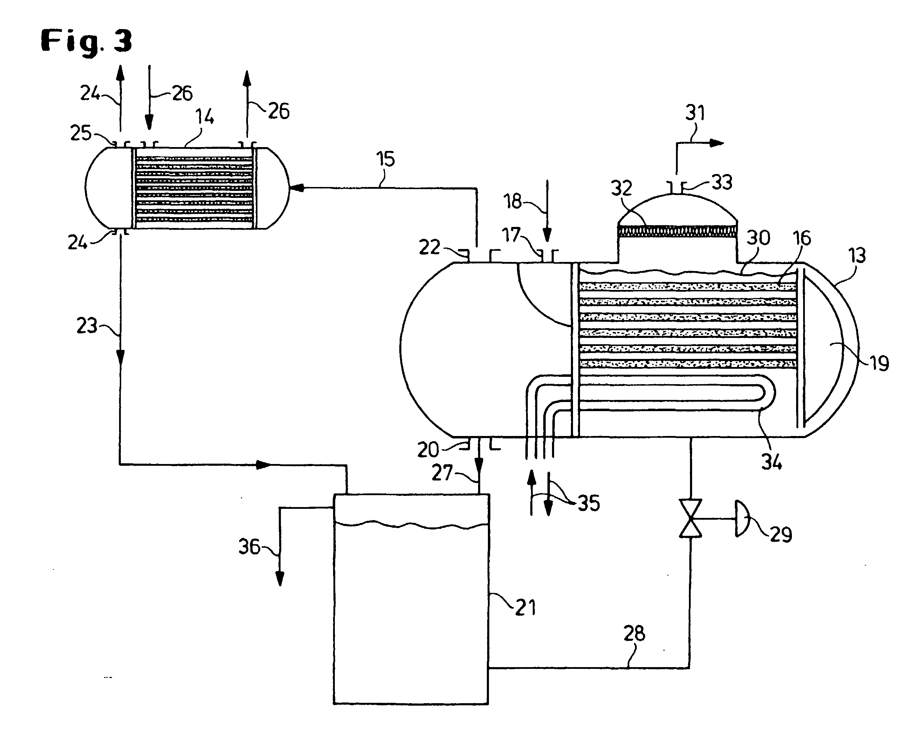

Figur 3 zeigt einen Wärmeaustauscher 13 zur rekuperativen Verflüssigung/Verdampfung von reinen und inertgashaltigen Dämpfen (z.B. Chlor) und ein daran angeschlossenes Kühlsystem 14, das z. B. einstufig oder mehrstufig ausgeführt ist und zur weiteren Kondensation von Dämpfen aus den Restgasen 15 dient, die im Wärmeaustauscher 13 nicht kondensiert werden. Als Beispiel für einen Rekuperator mit Zusatzheizung ist ein Wärmeaustauscher mit einem liegenden herausziehbaren Rohrbündel 16 dargestellt. Durch den Stutzen 17 gelangt inertgashaltiges Chlor 18 in den Rekuperator. Im skizzierten Beispiel durchströmt dieses Chlor-Inertgasgemisch zunächst die oberen Rohre des Rohrbündels 16 und nach der Umlenkung in der Umlenkkammer 19 die unteren Rohre. Das in den Rohren kondensierte Chlor 27 verläßt den Wärmetauscher 13 bzw. Rekuperator durch den Stutzen 20 und wird in eine Vorlage 21 abgeleitet. Das im Wärmeaustauscher 13 nicht kondensierte Chlor-Inertgasgemisch 15 verläßt den Wärmeaustauscher 13 durch den Stutzen 22 In dem Wärmeaustauschersystem 14 wird ein weiterer Teil des Chlors auskondensiert. Das im Wärmeaustauschersystem 14 verflüssigte Chlor 23 verläßt den Wärmeaustauscher 14 durch den Stutzen 24 und wird zweckmäßig ebenfalls in die Vorlage 21 abgeleitet. Die im Wärmeaustauschersystem 14 nicht verflüssigten Restgase 24 werden durch den Stutzen 25 abgeführt. Als Kühlmedium 26 für das Wärmeaustauschersystem 14 können z. B. Wasser, siedende Frigene oder siedendes Chlor bei einem Druck niedriger als im Mantelraum des Rekuperators 13 verwendet werden. Zur Kühlung des Dampf-Inertgas-Gemisches 18 wird das verflüssigte Chlor 27 bzw. 28 in dem Mantelraum des Wärmeaustauschers 13 bei einem Druck verdampft, der niedriger ist als der Druck des Stoffstroms 18. Aus der Vorlage 21 gelangt das flüssige Chlor 28 über ein Drosselventil 29 in den Mantelraum des Wärmeaustauschers 13. Die Menge der im Rekuperator befindlichen flüssigen Phase (flüssiges Chlor) 28 wird mit Hilfe des Flüssigkeitsstandes 30 im Mantelraum des Wärmeaustauschers 13 geregelt. Der im Mantelraum des Wärmetauschers 13 entstehende Dampf 31 durchströmt noch zweckmäßigerweise einen Tropfenabscheider 32. Der Dampf 31 verläßt dann den Wärmeaustauscher 13 durch den Stutzen 33.

Die zur Erzeugung von Blasensieden im Wärmetauscher 13 erforderliche zusätzliche Beheizung erfolgt hier durch die Haarnadelrohre 34, die von einer Heizflüssigkeit 35 oder einem kondensierenden Dampf als Heizmittel durchströmt werden, der zweckmäßig aus dem im Wärmeaustauschersystem 14 verdampften und anschließend komprimierten Kühlmittel 26 besteht. Da der die Vorlage 21 verlassende Massenstrom 28 i. a. kleiner ist als die Summe der Massenströme 27 und 23, wird der Überschuß 36 z.B. in einen Lagerbehälter für flüssiges Chlor abgeleitet.

## Patentansprüche

1. Verfahren zur Verbesserung des Wärmeübergangs in einem Wärmetauscher, bei dem die Wärmetauscherelemente von einem Heizmedium durchströmt werden und ihre Wärme an eine mit ihnen in Kontakt stehende, in einem die Wärmetauscherelemente umschließenden Mantelraum des Wärmetauschers befindliche Flüssigkeit abgeben, **dadurch gekennzeichnet, daß** der Wärmetauscher (13) in Verbindung mit dem Mantelraum als Chlorrekuperator betrieben wird, wobei dem Mantelraum verflüssigtes Chlor (28) kontinuierlich zugeführt wird, das aufgrund der durch den Wärmetauscher (13) zugeführten thermischen Energie verdampft und als Chlorgas (15) wieder kontinuierlich abgeführt wird, während den Wärmetauscherelementen (16) als Heizmedium gasförmiges Chlor (18) zugeführt wird, das beim Durchströmen der für das gasförmige Chlor (18) als Verdampfungskühler wirkenden Wärmetauscherelemente (16) zumindest teilweise auskondensiert und als verflüssigtes Chlor (27) kontinuierlich abgezogen wird, und das flüssige Chlor (28) zwischen den Wärmetauscherelementen (16) im Mantelraum durch zusätzliche Heizelemente (34) lokal auf eine so hohe Temperatur aufgeheizt wird, daß in der Flüssigkeit an der Oberfläche dieser Zusatz-Heizelemente (34) Blasensieden auftritt und die entstehenden Dampfblasen zwischen den regulären Wärmetauscherelementen (16) im Mantelraum aufsteigen, wobei die Temperaturdifferenz ΔT_{H} zwischen der Oberfläche der zusätzlichen Heizelemente (34) und der Siedetemperatur des flüssigen Chlors (28) mehr als 10°C, vorzugsweise mehr als 20°C beträgt.

2. Verfahren nach Anspruch 1, **dadurch gekennzeichnet, daß** die Beheizung der Zusatzheizelemente (34) elektrisch oder mit Flüssigkeiten, Gasen oder kondensierenden Dämpfen als Heizmittel erfolgt.

3. Verfahren nach Anspruch 2, **dadurch gekennzeichnet, daß** als Heizmittel gasförmiges, in den Zusatzheizelementen (34) auskondensierendes Chlor oder ein anderes Kältemittel verwendet wird.

4. Vorrichtung zur Durchführung des Verfahrens nach Anspruch 1 - 3, bestehend aus einem Verdampferkühler mit vertikal übereinander angeordneten, sich in horizontaler Richtung erstreckenden Wärmetauscherelementen (1,8) und einem die Wärmetauscherelemente (1,8) einschließenden, einen Mantelraum bildenden Behälter, **dadurch gekennzeichnet, daß** unterhalb der Wärmetauscherelemente (1,8) oder zwischen ihnen, vorzugsweise im unteren Drittel der vertikalen Anordnung, zusätzliche Heizelemente (2,9) angeordnet sind, die mit einem von den Wärmetauscherelementen (1,8) getrennten Heizmittelkreislauf verbunden sind.

5. Vorrichtung nach Anspruch 4, **dadurch gekennzeichnet, daß** die Wärmetauscherelemente aus parallel zur Behälterachse angeordneten Rohren (1) bestehen.

6. Vorrichtung nach Anspruch 4, **dadurch gekennzeichnet, daß** die Wärmetauscherelemente aus parallel zur Behälterachse angeordneten Hohlplatten (8) mit vertikal orientierten Wärmetauscherflächen bestehen.

7. Vorrichtung nach Anspruch 5 oder 6, **dadurch gekennzeichnet, daß** die zusätzlichen Heizelemente aus parallel zur Behälterachse angeordneten, elektrisch beheizbaren Heizstäben oder von einem Heizmittel durchströmten Rohren (2,9) bestehen.

8. Vorrichtung nach Anspruch 4 - 7, **dadurch gekennzeichnet, daß** zur Erzeugung einer zu einem Schlaufenraktor analogen Umlaufströmung im Behälter zu beiden Seiten der Wärmetauscherelemente (1,8) Leitbleche (7,12) angeordnet sind, die einen die Wärmetauscherelemente enthaltenden Strömungstauscherelemente ausgebildeten Strömungsraum mit absteigender Strömung M_{U} begrenzen.

## Claims

1. Method for improving heat transfer in a heat exchanger, in which a heating medium passes through heat exchange elements which transfer their heat to a liquid with which they are in contact and which is located in a jacket region of the heat exchanger surrounding the heat exchange elements, **characterised in that** the combined heat exchanger (13) and jacket region is operated in the form of a chlorine recuperator, wherein liquefied chlorine (28) is continuously introduced into the jacket region and is evaporated as a result of the thermal energy introduced via the heat exchanger (13) and is removed again continuously in the form of chlorine gas (15), while gaseous chlorine (18) is introduced into the heat exchange elements (16) in the form of a heating medium and at least partially condenses on passing through the heat exchange elements (16), which act as evaporative condensers for the gaseous chlorine (18), and is removed continuously in the form of liquefied chlorine (27) and the liquid chlorine (28) between the heat exchange elements (16) in the jacket region is heated locally by additional heating elements (34) to such a high temperature that nucleate boiling occurs in the liquid on the surface of these additional heating elements (34) and the vapour bubbles formed ascend between the main heat exchange elements (16) in the jacket region, the temperature difference ΔT_{H} between the surface of the additional heating elements (34) and the boiling temperature of the liquid chlorine (28) being more than 10 °C, and preferably more than 20 °C.

2. Method according to claim 1, **characterised in that** that the additional heating elements (34) are heated electrically or with the aid of liquids, gases or condensing vapours as the heating media.

3. Method according to claim 2, **characterised in** the heating medium used is gaseous chlorine, condensed in the additional heating elements (34), or another refrigerant.

4. Apparatus for carrying out the method according to claim 1 to 3, consisting of an evaporative condenser containing vertically superimposed heat exchange elements (1, 8) extending in a horizontal direction and a shell which encloses the heat exchange elements (1, 8) and forms a jacket region, **characterised in that** additional heating elements (2, 9) connected to a heating medium circuit, which is separate from the heat exchange elements (1, 8), are arranged beneath or between the heat exchange elements (1, 8) and preferably in the bottom third of the vertical arrangement.

5. Apparatus according to claim 4, **characterised in that** the heat exchange elements consist of tubes (1) arranged parallel to the axis of the shell.

6. Apparatus according to claim 4, **characterised in that** the heat exchange elements consist of hollow plates (8) which have vertically orientated heat exchange surfaces and are arranged parallel to the axis of the shell.

7. Apparatus according to claim 5 or 6, **characterised in that** the additional heating elements consist of electrically heatable heating rods arranged parallel to the axis of the shell or of tubes through which a heating medium flows.

8. Apparatus according to any of claims 4 to 7, **characterised in that** in order to produce a circulating flow in the shell similar to a loop reactor guiding plates (7, 12) are arranged on both sides of the heat exchange elements (1, 8), which guiding plates (7, 12) delimit a flow region of downward flow M_{U} formed from flow exchange elements containing heat exchange elements.

## Revendications

1. Procédé pour améliorer le transfert de chaleur dans un échangeur de chaleur dans lequel les éléments échangeurs de chaleur sont traversés par un courant de fluide chauffant et leur chaleur est cédée à un liquide en contact avec eux qui se trouve dans une enveloppe de l'échangeur de chaleur renfermant les éléments échangeurs de chaleur, **caractérisé en ce que** l'échangeur de chaleur (13) opère en combinaison avec l'enveloppe en tant que récupérateur de chlore, par envoi en continu dans l'enveloppe de chlore liquéfié (28) qui vaporise en raison de l'énergie thermique apportée par l'échangeur de chaleur (13) et est évacué en continu à l'état de chlore gazeux (15), cependant que l'on envoie dans les éléments échangeurs de chaleur (16), en tant que fluide chauffant, du chlore gazeux (18) lequel, en traversant les éléments échangeurs de chaleur (16) qui font fonction de réfrigérant-vaporiseur pour le chlore gazeux (18), est condensé en partie au moins et évacué à l'état de chlore liquéfié (27) et le chlore liquéfié (28) qui se trouve dans l'enveloppe entre les éléments échangeurs de chaleur (16) est chauffé localement par des éléments chauffants supplémentaires (34) à une température suffisante pour que dans le liquide, à la surface de ces éléments chauffants supplémentaires (34), il se produise une vaporisation avec formation de bulles, les bulles de vapeur formées montant dans l'enveloppe entre les éléments échangeurs de chaleur réguliers (16), la différence de température ΔT_{H} entre la surface des éléments chauffants supplémentaires (34) et la température d'ébullition du chlore liquéfié (28) étant supérieure à 10°C et de préférence supérieure à 20°C.

2. Procédé selon la revendication 1, **caractérisé en ce que** le chauffage des éléments chauffants supplémentaires (34) est dû à l'électricité ou à un fluide chauffant consistant en liquide, gaz ou vapeur qui se condense.

3. Procédé selon la revendication 2, **caractérisé en ce que** l'on utilise en tant que fluide chauffant du chlore gazeux qui se condense dans les éléments chauffants supplémentaires (34) ou un autre agent réfrigérant.

4. Appareillage pour la mise en oeuvre du procédé selon les revendications 1 à 3, consistant en un réfrigérant-vaporiseur à éléments échangeurs de chaleur disposés verticalement les uns au-dessus des autres et s'étendant en direction horizontale (1,8) et un récipient formant une enveloppe qui renferme les éléments échangeurs de chaleur (1,8), **caractérisé en ce que**, au-dessous des éléments échangeurs de chaleur (1,8) ou entre eux, de préférence dans le tiers inférieur de l'agencement vertical, on a disposé des éléments chauffants supplémentaires (2,9) en liaison avec un circuit de fluide chauffant séparé des éléments échangeurs de chaleur (1,8).

5. Appareillage selon la revendication 4, **caractérisé en ce que** les éléments échangeurs de chaleur consistent en tubes (1) disposés parallèlement à l'axe du récipient.

6. Appareillage selon la revendication 4, **caractérisé en ce que** les éléments échangeurs de chaleur consistent en plaques creuses (8) disposées parallèlement à l'axe du récipient et à surfaces échangeuses de chaleur orientées verticalement.

7. Appareillage selon la revendication 5 ou 6, **caractérisé en ce que** les éléments chauffants supplémentaires consistent en barreaux chauffés électriquement disposés parallèlement à l'axe du récipient ou en tubes parcourus par un fluide chauffant (2,9).

8. Appareillage selon les revendications 4 à 7, **caractérisé en ce que**, pour provoquer dans le récipient une circulation analogue à celle réalisée dans un réacteur à circuit, on a disposé des deux côtés des éléments échangeurs de chaleur (1,8) des tôles conductrices (7,12), qui limitent une zone d'écoulement formée par les éléments échangeurs de chaleur, avec écoulement ascendant M_{U}.
